Europäisches Patentamt

European Patent Office

Office européen des brevets

(11) Publication number: **0 038 120**
A2

(12) **EUROPEAN PATENT APPLICATION**

(21) Application number: **81301067.5**

(22) Date of filing: **13.03.81**

(51) Int. Cl.³: **H 02 K 53/00**

(30) Priority: **04.04.80 JP 44877/80**

(43) Date of publication of application: **21.10.81**
**Bulletin 81/42**

(84) Designated Contracting States: **AT BE CH DE FR GB IT LI LU NL SE**

(71) Applicant: **Hiroe, Tsuneo, 1004 Ohba-cho, Matsue-Shi Shimane-ken (JP)**

(72) Inventor: **Hiroe, Tsuneo, 1004 Ohba-cho, Matsue-Shi Shimane-ken (JP)**

(74) Representative: **Lawson, David Glynne et al, MARKS & CLERK 57-60 Lincoln's Inn Fields, London WC2A 3LS (GB)**

(54) **Magnetic rotary prime mover.**

(57) A magnetic rotary prime mover has a flange-shaped rotary plate (25) securely fixed to an output shaft (23) rotatably supported on a frame. Planetary gears (29) are rotors consisting of magnets (41) are securely fixed to a number of planetary shafts arranged in a circle and mutually engage and rotate while engaging with a stationary gear (27) securely fixed on the frame, and a plurality of pairs of magnetic stators (43a, 43b, 45a, 45b) for providing rotational torque are disposed around the respective rotors so that the total rotational torque of the respective rotors is applied to the output shaft through the rotary plate.

## ₋MAGNETIC ROTARY PRIME MOVER

The present invention relates to a magnetic
rotary prime mover suitable for driving a charging
generator for batteries; a generator as a power
source for lighting systems such as lighting equipment, display equipment, traffic signals and so
on; pumps or blowers for supplying and exhausting
water or air; and compact machinery such as various
measuring instruments.

As is widely known, it is necessary to continuously supply natural energy, electric energy
or fuel energy to drive all kinds of prime movers
for various purposes for a long period of time.
Due to this, problems have arisen when a prime
mover must be used at a place or under conditions
in which the continuous supply of external energy
is difficult. This is because special equipment
and devices are required for storing or supplying
energy in order to drive the prime mover, and
management of such equipment and devices requires
much labour and supporting equipment.

It is, therefore, an object of the present invention to provide a prime mover which does not require a continuous supply of external energy and which can thus be installed and used at a place where the supply of energy is difficult.

The prime mover should be light in weight and compact for facilitating installation and transfer, and it should not require complex supporting equipment for driving and control of operation.

The above and other objects are accomplished according to the invention by a magnetic rotary prime mover comprising a stationary gear securely fixed to a frame, an output shaft rotatably supported on the frame, a flange-shaped rotary plate securely fitted to said output shaft, planetary shafts rotatably supported on a pitch circle coaxial with the output shaft at the outer circumference of said rotary plate at equal intervals; planetary gears which are securely supported on said planetary shafts for engagement and rotation therewith at the same speed in the same direction and which engage with said stationary gear; rotors comprising magnets secured to said respective planetary shafts; and a plurality of pairs of each pair disposed inside and outside a rotation locus of said rotors to form opposite magnetic fields for generating rotational torque on said respective rotors.

0038120

The nature, principle and details of the invention will be more clearly apparent from the following detailed description of the preferred embodiments of the invention, with reference to the accompanying drawings, in which:

Figure 1 is a sectional view of a prime mover of the present invention as viewed from the front along the line 1 - 1 of Figure 2;

Figure 2 is a sectional view along the line 11- 11 of Figure 1 illustrating the side construction of the prime mover;

Figure 3 is a view showing the distribution of lines of magnetic force when the prime mover stators are not connected; and

Figure 4 is a partial sectional view showing the side construction of the main part of the prime mover stators according to another embodiment of the present invention.

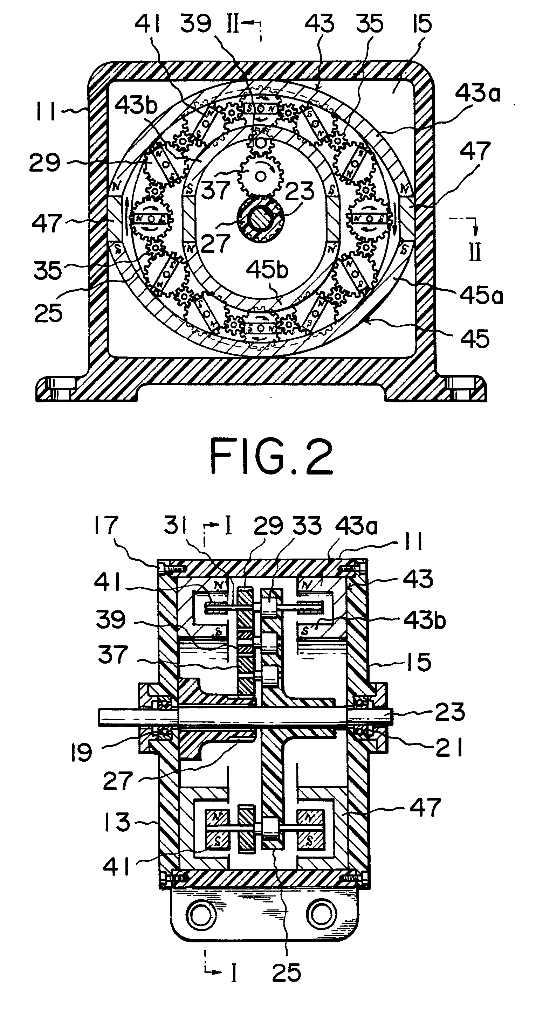

Figures 1 and 2 show the internal construction of a prime mover of the present invention, as viewed from the front and side. As may be seen from these Figures, the drive mechanism for the prime mover is encased in a cylindrical casing 11 which is open at one or both ends, which is hollow inside, and which also functions as the frame of the prime mover.

Covers 13 and 15 are fitted over the open front and rear ends of the casing 11 in such a manner that they can be fastened with bolts 17. At the center of the covers 13 and 15 are bearings 19 and 21, respectively, comprising plain bearings, ball or roller bearings or the like. An output shaft 23 rotatably fits both of the bearings 19 and 21. Either of the covers 13 and 15 may be formed as an integral part of the frame (casing 11).

A flange-shaped circular rotary plate 25 is securely fitted and supported on the output shaft 23 within the casing 11. A cylindrical stationary sun gear 27 protruding towards the rotary plate 25 is securely mounted to the inside of the front cover 13. The output shaft 23 is inserted at the center of the stationary gear 27 but is rotatable with respect to the stationary gear 27.

A number of (12 in the embodiment shown in the Figure) planetary gears 29 are supported by planetary shafts 31 near the outer circumference at the front side of the rotary plate 25. The planetary shafts 31 are rotatably supported by bearings 33 fitted in the rotary plate 25 and are supported through the rotary plate 25. The respective shafts 31 are arranged at equal intervals on a pitch circle having the same center as the output shaft 23.

0038120

All of the planetary gears 29 have the same diameter and the same number of teeth, and idler gears 35 of small diameter are axially supported on the rotary plate 25 and are disposed between and mesh with respective planetary gears 29.

In addition to the idler gears 35, an intermediate gear 37 engaging with the stationary gear 27, and another idler gear 39 simultaneously engaging with the intermediate gear 37 and planetary gears 29, are axially supported between one of the planetary gears 29 and the stationary gear 27 at the front side of the rotary plate 25 as described above. With the construction described above, the stationary gear 27, the intermediate gear 37, and the planetary gears 29 have the same diameter so that they have the same rotation ratio.

Rod or plate-shaped rotors 41 constituting magnets having opposite poles at each end are securely coaxially mounted at both of the front and the rear ends of the planetary shafts 31.

In the embodiment shown in Figure 1, twelve planetary shafts 31 are provided on a pitch circle having the same center as the output shaft 23 and are spaced apart along the circumference by $30^\circ$. Thus, twenty-four rotors 41 are disposed at both sides of the rotary plate 25. Respective rotors 41 engage with respective gears 29 so that the magnetic axis of one rotor 41 is sequentially rotated through 60$^o$ in a predetermined direction with respect to the adjacent rotor 41 and so on. As a result, when the rotary plate 25 rotates clockwise through 360$^o$, the rotors 41 also independently rotate clockwise through 360$^o$ so that the absolute rotation is 720$^o$ in the clockwise direction.

As has been described above, the rotors 41 revolve around the stationary gear 27 and also turn on their own axis with the rotation of the planetary gears rotating at the same angular speed. Stators 43 and 45 comprising channel-shaped magnets in the casing 11 surround, from within and without, the locus of revolution of the respective rotors 41 about the output shaft 23, and continually enclose all of the rotors 41 in their magnetic fields.

Thus, as shown in Figures 1 and 2, the stators 43 and 45 having channel-shaped cross ectional areas and formed integrally with each other which are disposed at the outside and inside of the locus of revolution of the respective rotors 41 to surround the rotors 41 from both sides, are securely mounted on the front and rear covers 13 and 15. These stators 43 and 45, in the embodiment shown in Figure 1, are formed as two divided parts which are vertically symetrical to each other. The sides of the channel-shaped sectional stators constitute outer stators
43a and 45a and inner stators 43b and 45b.

The outer stators 43a and 45a are of opposite
magnetic polarity from the inner stators 43b and 45b
of the respective stators 43 and 45. The upper
stators 43a and 43b are also of opposite polarity
from the lower stators 45a and 45b, respectively.
The radius of curvature of the arc of the outer
stators 43a and 45a is designed to be larger than the
radius of curvature of the arc of the inner stators
43b and 45b. The distance between the outer stators
43a and 45a and the inner stators 43b and 45b
(space surrounding the rotors 41) narrows at the
central portions of the upper and lower stators
and widens at the portions between the ends of the
mutually opposing upper and lower stators, so that
space surrounding the rotors is nonuniform in a
vertically and horizontally symmetrical manner as
a whole. The magnetic fields of the stators 43
and 45 applied to the rotors 41 are strong at the
narrowed portions and weak at the widened portions.
The ends of the mutually opposing arcs of the outside
stators 43a and 45a and the inside stators 43b and
45b are securely connected with a connecting
piece 47 of a ferromagnetic material which does not
produce residual magnetization, and the magnetic
poles of the vertically disposed stators are
short-circuited. As shown in Figure 1, the respective
connecting pieces 47 connect the outer stators 43a and 45a and the inner stators 43b and 45b at the widened area between the ends of the mutually opposing upper and lower status.

As has been described, in the embodiment shown in Figure 1, twelve rotors 41 are mounted in a circle at 30° intervals and are sequentially rotated through 60°. When the rotary plate 25 rotates and returns to its original position after one revolution, the respective rotors 41 rotate two revolutions (including one revolution on their own axes) and are oriented horizontally at the narrowed and widened portions. The distance between the outer stators 43a and 45a and the inner stators 43b and 45b changes from wide to narrow according to the loci of revolution of the respective rotors 41, as has been described hereinbefore.

Between the rotors 41 and the stators 43 and 45 at places other than where the magnetic polarity is oriented horizontally at the narrowed portions, the respective rotors 41 receive the force of the magnetic field of the stators 43 and 45 and attract or repel each other to produce a rotational torque in the clockwise direction. The rotational torque produced in the respective rotors 41 rotates as a group the respective planetary gears 29 connected to the corresponding shafts 31 and rotates the rotary plate 25 relative to the stationary gear 27 through the idler gears 39 and the intermediate gear 37.

Since the ends of the vertically disposed stators 43 and 45 are connected by the connecting pieces 47 of ferromagnetic material, the magnetic forces between the respective poles of the stators 43a and 45a and the stators 43b and 45b are reduced. As a result, the rotors 41 passing between the left and right connecting pieces 47 are not substantially affected by the magnetic field of the stators 43 and 45, and a magnetic reluctance, that is, a rotational loss is not produced. Even when such a rotational resistance is produced, it is very small.

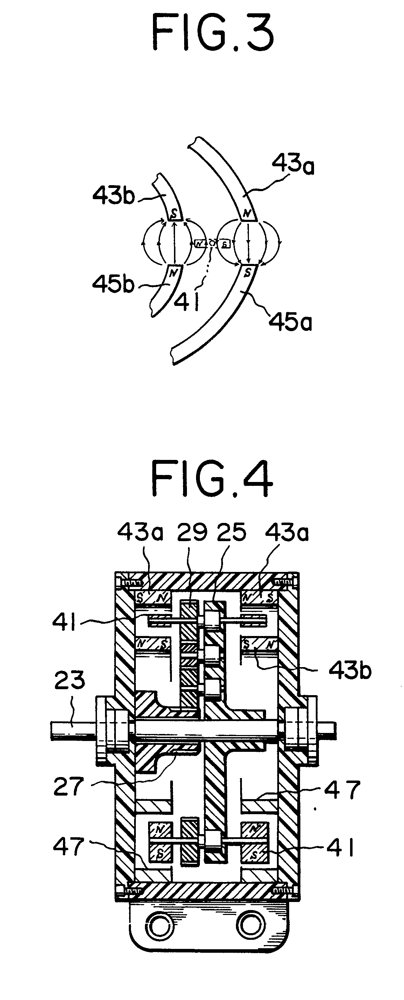

Figure 3 is a view illustrating the distribution of the lines of magnetic force when the connecting pieces 47 between the vertically disposed stators 43 and 45 are not included. When the connecting pieces 47 are inserted, the magnetic fields at the ends of the vertically disposed stators 43 and 45 cancel each other to reduce the magnetic force, so that the magnetic field becomes weaker nearer to the central position of the connecting pieces 47, and the magnetic field of the stators is almost neutralized at the central position.

As may be apparent from the above description, the rotational torque of the rotary plate 25 and the output shaft 23 of the prime mover of the present invention is obtained with the sum of the rotational torques of a number of rotors 41 mounted around the rotary plate 25. The effective rotational torque on the output shaft 23 of the prime mover as shown in Figures 1 and 2 may be considered to be obtained by subtracting the mechanical rotational losses of the rotary parts inside the prime mover and the rotational losses of the four rotors 41 at the connecting portions at the front and back sides of the stators 43 and 45 from the total rotational torque of the other twenty rotors 41.

Figure 4 is a sectional view illustrating the side structure of the main part of another embodiment of the stators of the prime mover of the present invention, showing the same section as in Figure 2. In this embodiment, the outer stator 43a and the inner stator 43b comprise separate cylindrical magnets, and each is fixed to the covers 13 and 15, respectively. The lower stators are constructed in the same manner and are disposed to be vertically symmetrical to the upper stators 43a and 43b. As in the embodiment shown in Figure 1, the magnetic poles of the outer and inner, and upper and lower stators are oppositely oriented.

Although the prime mover of the present invention have been described in detail with reference to two embodiments, the method for increasing and decreasing the rotational torque on the output shaft 23 of the prime mover may include various methods to be described below without departing from the basic principles of the present invention.

First, for reducing to half the rotational torque of the output shaft 23, the rotors 41 disposed at both the front and rear sides of the rotary plate 25 shown in Figure 2, may be provided at only one of these sides of the rotary plate 25. In this case, since the number of rotors 41 is reduced to half, the output of the output shaft 23 obtained with the rotors is also reduced by half, and the stators 43 and 45 may be eliminated on the side where the rotors are not disposed.

Conversely, the rotational torque of the output shaft 23 may be increased by the number of rotors 41. In this case, the diameter of the tch circle for arranging the rotors 41 is made greater. Further, the diameter of the rotary plate 25 must be made greater in a corresponding manner. Thus, it is necessary to enlarge the outer diameter and increase the number of teeth of the idler gear 39 or to increase the number of the idler gears 39 by an odd number of 3 or more. For increasing the number of rotors 41, upon every turn of the rotors 41 in the magnetic field of the stators, the magnetic poles of the rotors and the magnetic poles of the stators must return to their original relative conditions. Thus, even number times of stators are required as many as those in the embodiment shown in Figure 1, and their shape must be curved so that the rotation of the rotors may be most efficiently performed.

As a method for increasing the rotational torque of the output shaft 23, it is possible to connect the output shafts of a number of prime movers, or to take out the rotational torque from the end of a single shaft attached to a number of prime movers.

A mechanism for starting and interrupting the operation of the prime mover will be described, and an example of such a mechanism may include one in which a brake device such as a brake drum is disposed on the output shaft 23 to interrupt the rotation. According to another method, it is possible to horizontally move the stators 43 and 45 and the covers 13 and 15 along the output shaft 23 relative to the rotary plate 25. It is also possible to adopt a method for moving both the stators and the rotary plate 25 to place the rotors 41 outside the magnetic fields of the stators.

When using permanent magnets for the rotors and stators, it is preferable to use sintered metal-powder magnets such as ferrite permanent magnets. In this case, the coercive force per volume is greater, the change with the passage of time is smaller and the service life is longer as compared with cast magnets. These sintered magnets are preferable for compactness and lightness.

In order to counteract the weakening effects, by change with time or loads, on the magnetic fields of the stators and rotors comprising permanent magnets, coils for re-magnetization are mounted to the rotors and stators in advance, although not shown in the Figures. The structure is such that a required current flows through the coils when re-magnetization is desired, so that the re-magnetization is easy and the service life of the device is prolonged.

Although with the prime mover of the present invention, the stators 43 and 45, the rotors 41, and the connecting pieces 47 comprise ferromagnetic materials, it is preferable to use non-magnetic materials such as non-iron metals and synthetic resins for the other members, in order to make the prime mover lighter, to reduce the magnetic flux leakage of the stators and rotors, and to more effectively use the magnetic flux for improving the energy efficiency of the prime mover.

CLAIMS

1.    A rotary prime mover characterised by a
stationary gear (27) securely fixed to a frame
(11, 13, 15), an output shaft (23) rotatably
supported on the frame, a flange-shaped rotary
plate (25) securely fitted to said output shaft,
planetary shafts (31) rotatably supported on a
pitch circle coaxial with said output shaft
at the outer circumference of said rotary plate
(25) at equal intervals; planetary gears (29)
which are securely supported on said planetary
shafts (31) for engagement and rotation therewith
at the same speed in the same direction and which
engage  with said stationary gear (27); rotors comprising magnets (41) secured to said respective
planetary shafts (31); and a plurality of pairs
of stators (43, 45) each pair disposed inside
and outside a rotation locus of said rotors
(41) to form opposite magnetic fields for generating rotational torque on said respective rotors (41).

2.    A magnetic rotary prime mover as claimed
in Claim 1, characterised in that arc-shaped pieces
(43a, 43b, 45a, 45b) of alternately opposite magnetic
polarities are connected as said outer and inner
stators, and ferromagnetic bodies (47) of a material
which does not have residual magnetism are inserted
between said connected arc-shaped pieces.

3.    A magnetic rotary prime mover as claimed in Claim
1 or 2, characterised in that said outer and inner stators
(43a, 43b, 45a, 45b) are integrally formed in a channel shape.

4.   A magnetic rotary prime mover as claimed in Claim 1 or 2, characterised in that said outer and inner stators (43a, 43b, 45a, 45b) are formed in separate cylindrical shapes.

5.   A magnetic rotary prime mover as claimed in any of Claims 1 to 4 characterised in that said rotors (41) fixed to said planetary shafts (31) are disposed at either the front or rear side of said rotary plate (25).

6.   A magnetic rotary prime mover as claimed in any of Claims 1 to 4 characterised in that said rotors (41) fixed to said planetary shafts (31) are disposed at both of the front and rear sides of said rotary plate (25).

FIG. 1

Q038120

FIG.2

# FIG.3

43b 43a

45b 45a

41

# FIG.4

43a 29 25 43a

41

23

43b

27 47

47 41